# EUROPEAN PATENT APPLICATION

(11) **EP 4 119 409 A1**
(43) Date of publication of application: **18.01.2023**
(21) Application number: 20924611.5
(22) Date of filing: 10.03.2020
(51) Int. Cl.: B60W 30/10, B60W 30/09, B60W 60/00

(54) **TRAVEL ROUTE SETTING METHOD AND TRAVEL ROUTE SETTING DEVICE**

(71) Applicant: NISSAN MOTOR CO., LTD., Kanagawa 221-0023 (JP); RENAULT s.a.s., 92100 Boulogne-Billancourt (FR)
(72) Inventor: NANRI, Takuya, Atsugi-shi, Kanagawa 243--0123 (JP); TANAKA, Shinya, Atsugi-shi, Kanagawa 243--0123 (JP); YAMAGUCHI, Shotaro, Atsugi-shi, Kanagawa 243--0123 (JP)
(74) Representative: Grünecker Patent- und Rechtsanwälte PartG mbB
(86) International application number: PCT/IB2020/000332
(87) International publication number: WO 2021/181127

(57) **Abstract**

One aspect of the present invention is a traveling path setting method for a vehicle, wherein a set traveling path of a host vehicle includes a traveling path that turns across another lane at an intersection, and the traveling path setting method is configured to set a traveling path for turning of the vehicle to an inner side of a turning direction when an adjacent vehicle exists within a predetermined distance outward of the traveling path of the host vehicle in the turning direction, compared to a case where no adjacent vehicle exists.

## Description

### TECHNICAL FIELD

The present invention relates to a traveling path setting method and a traveling path setting device.

### BACKGROUND ART

In order to assist a driver in driving a vehicle, a traveling path of a host vehicle is determined on the basis of a distance to an adjacent vehicle when a vehicle travels on an adjacent lane. For example, WO2018-047291A discloses a technique for suppressing the other vehicle from approaching the host vehicle by setting the traveling path such that an inter-vehicular distance in the front-rear direction is provided to avoid the host vehicle and the other vehicle from running in parallel when there is a curve ahead in the traveling path of the host vehicle and the other vehicle travels on the adjacent lane.

### SUMMARY OF INVENTION

However, it is difficult to apply the technique disclosed in WO2018-047291A when a plurality of vehicles running in parallel in the lateral direction make a turn at an intersection across another lane, for example, when making a right turn across an oncoming lane or an intersecting lane existing on the right side under a left-hand traffic environment. That is, for example, assuming that the host vehicle and the other vehicle stop side by side in the lateral direction at an intersection while waiting for a traffic light and then the vehicles start and turn, it is necessary to delay the start of the host vehicle in order to provide a predetermined inter-vehicular distance in the front-rear direction between the host vehicle and the other vehicle running in parallel. This may make it difficult to achieve a smooth driving.

It is an object of the present invention to provide a traveling path setting method and a traveling path setting system, capable of suppressing the other vehicle from approaching the host vehicle when a plurality of vehicles running in parallel in the lateral direction make a turn as described above.

One aspect of the present invention is a traveling path setting method for a vehicle, wherein a set traveling path of a host vehicle includes a traveling path that turns across another lane at an intersection; and the traveling path setting method is configured to set a traveling path for turning of the vehicle to an inner side of a turning direction when an adjacent vehicle exists within a predetermined distance outward of the traveling path of the host vehicle in the turning direction, compared to a case where no adjacent vehicle exists.

### BRIEF DESCRIPTION OF DRAWINGS

FIG. 1 is a schematic configuration diagram illustrating a driver-assistance device according to a first embodiment.
FIG. 2 is a diagram illustrating a vehicle traveling state when a traveling path is corrected.
FIG. 3 is a diagram illustrating an example of correction for the traveling path.
FIG. 4 is a flowchart illustrating a driver-assistance control.
FIG. 5 is a flowchart illustrating details of a traveling path creation control.
FIG. 6 is a schematic configuration diagram illustrating a driver-assistance device according to a second embodiment.
FIG. 7 is a flowchart illustrating a driver-assistance control.
FIG. 8 is a schematic configuration diagram illustrating a driver-assistance device according to a third embodiment.
FIG. 9 is a diagram illustrating a vehicle traveling state when the traveling path is corrected.
FIG. 10 is a diagram illustrating a vehicle traveling state when the traveling path is corrected.
FIG. 11 is a diagram illustrating a vehicle traveling state when the traveling path is corrected.
FIG. 12 is a diagram illustrating a vehicle traveling state when the traveling path is corrected.
FIG. 13 is a flowchart illustrating a driver-assistance control.
FIG. 14 is a flowchart illustrating a driver-assistance control according to a fourth embodiment.

### DESCRIPTION OF EMBODIMENTS

Hereinafter, embodiments of the present invention will be described with reference to the accompanying drawings and the like. Note that a concept of "driver-assistance" herein includes a vehicle motion control for assisting a part of driving operation of a vehicle driver (autonomous driving levels 1 to 4), and also includes a vehicle motion control without any operation of the driver (autonomous driving level 5).

In addition, in the following description for the embodiments, it is assumed that the left lane is a traveling lane and the right lane is an oncoming lane in the traffic regulations (that is, the traffic regulation for vehicle travel is based on a left-hand traffic environment). Thus, of the left and right turns at an intersection, the one crossing the straight-ahead lane of the oncoming vehicle is right turn. Alternatively, the turn crossing another lane, such as a lane crosses the host lane from the right direction, is the right turn. In contrast, the turn not crossing the oncoming lane at an intersection and joins to the lane intersecting the host lane from the right direction, that is, the turn that does not cross another lane is the left turn. In the traffic regulation, when the right lane is the traveling lane, and the left lane is the oncoming lane (that is, when the traffic regulation for a vehicle travel is based on a right-hand traffic environment), the turn that crosses another lane is the left turn.

### <First Embodiment

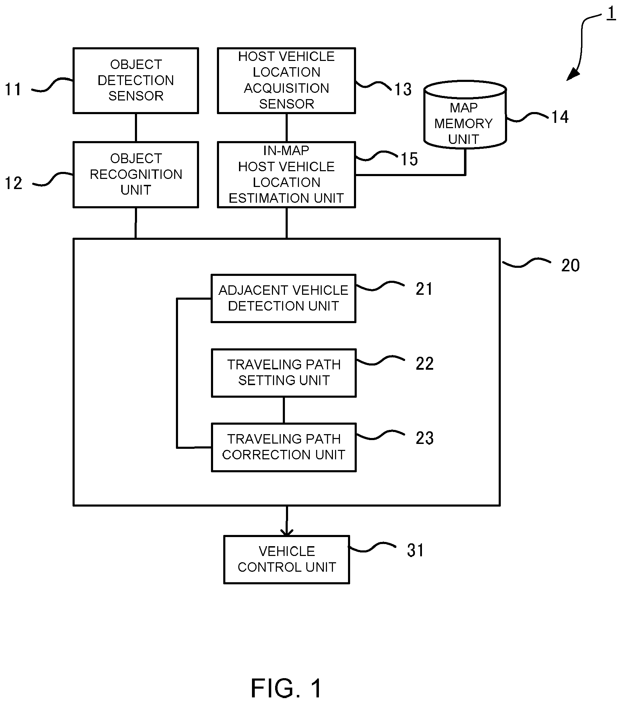

FIG. 1 is a schematic configuration diagram illustrating a driver-assistance device 1 according to this embodiment. Note that the driver-assistance device 1 is mounted on a vehicle or the like to detect a surrounding environment of a host vehicle and estimate a travel environment on the basis of the detected information on the surrounding environment. In addition, the driver-assistance device 1 executes acceleration/deceleration, lane change, or the like, or assists in the execution of these on the basis of a result of the travel environment estimation. The driver-assistance device 1 may perform driving assistance by displaying the traveling path on a monitor or the like.

The driver-assistance device 1 has an object detection sensor 11, an object recognition unit 12, a host vehicle location acquisition sensor 13, a map memory unit 14, an in-map host vehicle location estimation unit 15, a traveling path creation unit 20, and a vehicle control unit 31.

In an example of this embodiment, a part of elements of the driver-assistance device 1, for example, the object recognition unit 12, the map memory unit 14, the in-map host vehicle location estimation unit 15, the traveling path creation unit 20, and the vehicle control unit 31 are included in a single controller. The controller includes a computer having a central processing unit (CPU), a read-only memory (ROM), a random-access memory (RAM), and an input/output interface (I/O interface). Note that the controller may be a single device, or may be divided into a plurality of blocks and each processing of this embodiment may be processed in a distributed manner by a plurality of blocks.

Hereinafter, each configuration of the driver-assistance device 1 will be described in detail.

The object detection sensor 11 acquires a location, traveling direction, size, speed, or the like of an object (such as vehicle, motorcycle, pedestrian, and obstacle) existing around the host vehicle. Note that the object detection sensor 11 includes a LiDAR (Light Detection and Ranging), a millimeter-wave radar, a camera, or the like. The object detection result from the object detection sensor 11 contains a location, traveling direction, size, speed, or the like of an object on the road surface on which the host vehicle travels. The object detection sensor 11 outputs the object detection result to the object recognition unit 12.

The object recognition unit 12 corrects an error in the sensor by using the object detection result from the object detection sensor 11 to obtain a reasonable location, traveling direction, size, speed, or the like such that an error for each object is minimized in the detection result. In addition, the object recognition unit 12 verifies (associates) the identity of the object in the detection result at different times, and estimates the speed of the object on the basis of the association. The object recognition unit 12 outputs the recognition result such as a location, traveling direction, size, or speed of the object existing around the host vehicle to the traveling path creation unit 20. The recognition result from the object recognition unit 12 is provided by using relative coordinates with respect to the host vehicle.

The host vehicle location acquisition sensor 13 measures an absolute location, traveling direction, speed, or the like of the host vehicle by using a sensor that measures the absolute location such as GPS (Global Positioning System), odometer, or the like. The host vehicle location acquisition sensor 13 outputs the location information of the host vehicle to the in-map host vehicle location estimation unit 15.

The map memory unit 14 stores high-precision map data, and provides map information such as absolute locations of curbs or lanes, or connection relationships of lanes and relative positional relationships of lanes from the high-precision map data. The map memory unit 14 outputs the stored map information to the in-map host vehicle location estimation unit 15.

The in-map host vehicle location estimation unit 15 estimates the location of the host vehicle in the map on the basis of the host vehicle location information obtained by the host vehicle location acquisition sensor 13 and the map information stored in the map memory unit 14. The in-map host vehicle location estimation unit 15 outputs the in-map host vehicle location information to the traveling path creation unit 20.

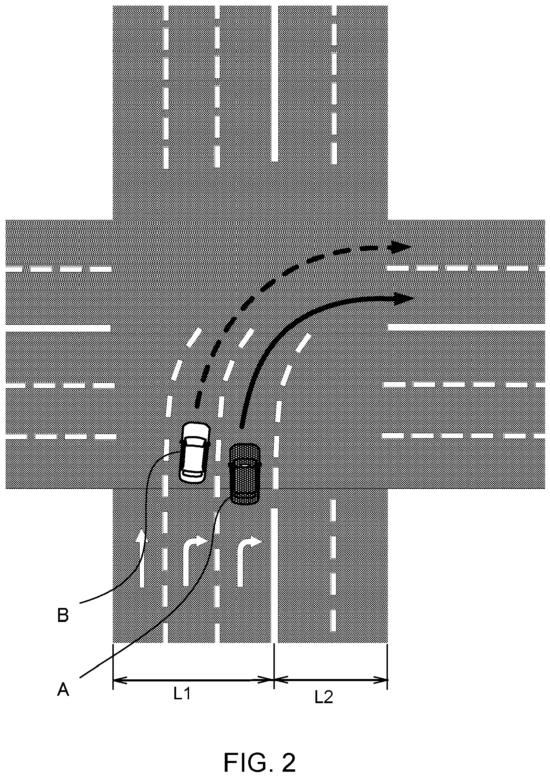

The traveling path creation unit 20 creates a traveling path, along which the host vehicle will travel in the future from the current location to the target location, by using the recognition result from the object recognition unit 12 and the in-map host vehicle location information obtained by the in-map host vehicle location estimation unit 15. In addition, the traveling path creation unit 20 corrects the traveling path to the inner side of the turning direction under the following situation shown in FIG. 2. Note that the target location may be a destination set in advance by an occupant or the like, or may be a target location on the path to be passed until reaching the destination.

FIG. 2 is a diagram illustrating a vehicle traveling state when the traveling path is corrected.

Referring to FIG. 2, the lanes extending in the up-down direction on the paper surface and the lanes extending in the left-right direction intersect at the intersection. Among the lanes extending in the up-down direction, three lanes L1 of the left side are the traveling lanes, and two lanes L2 on the right side are the oncoming lanes. It is assumed that, in front of the intersection, two lanes L1 on the right side of the three traveling lanes L1 are right turn purpose lanes (hereinafter, also referred to as "right turn lanes") for turning across the oncoming lane and the lanes intersecting from the right direction. The host vehicle "A" travels on the inner side (right side) of the two right turn lanes in the turning direction, and the other vehicle "B" travels on the outer side (left side) in the turning direction. The other vehicle B exists within a predetermined distance in the outer side of the turning direction in the turning path of the host vehicle A, and is hereinafter referred to as an "adjacent turning vehicle B".

When both the host vehicle A and the adjacent turning vehicle B make a right turn, the adjacent turning vehicle B may approach the host vehicle A. Therefore, in the lane of the host vehicle A, the traveling path creation unit 20 corrects the traveling path to the inner side of the turning direction with respect to the traveling path used in a case where the adjacent turning vehicle B does not exist.

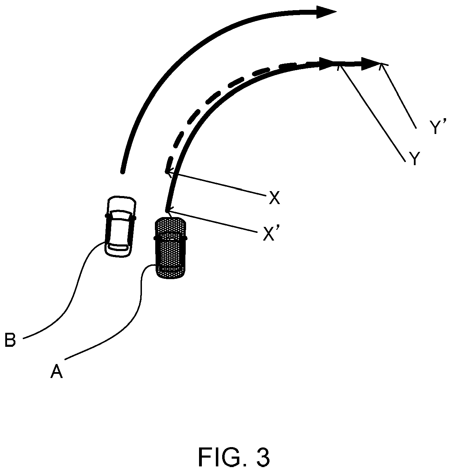

FIG. 3 is a diagram illustrating an example of a traveling path correction method. This drawing shows only the host vehicle A and the adjacent turning vehicle B shown in FIG. 2, and shows turn portions of the traveling paths of these vehicles when making a right turn. For the host vehicle A, a traveling path set before the correction is indicated by a broken line, and the corrected traveling paths are indicated by solid lines.

Referring to the traveling path of the host vehicle A, when the adjacent turning vehicle B exists, the turning start position X in the traveling path set in a case where the adjacent turning vehicle B does not exist is corrected to X' in front of the traveling direction. In addition, the turning end position Y is corrected to the position Y' in the destination side of the traveling direction. Then, the traveling path is set such that a change of the turning radius is minimized between the positions X' and Y'.

Note that, in this drawing, the turning path between the turning start position and the turning end position is indicated by a quadrant. However, the present invention is not limited thereto. The turning start position may be determined by a road structure such as a road sign or a side curb for guiding the traveling path of the right turn at the intersection. In addition, the turning end position may be determined by a starting point of the turning target lane. In this manner, when the adjacent turning vehicle B exists, it is possible to reduce a risk of the adjacent turning vehicle B approaching the host vehicle A by correcting the traveling path set in a case where the adjacent turning vehicle B does not exist.

Referring to FIG. 1 again, the traveling path creation unit 20 has an adjacent vehicle detection unit 21, a traveling path setting unit 22, and a traveling path correction unit 23.

The adjacent vehicle detection unit 21 detects another vehicle existing within a predetermined distance on the outer side (left side) of the turning direction as an adjacent vehicle on the basis of the recognition result from the object recognition unit 12 when the host vehicle makes a right turn across the oncoming lane. Note that the adjacent vehicle detection unit 21 may also detect another vehicle existing within a predetermined distance in the outer side in the turning direction of the host vehicle and in the front side with respect to the traveling direction as the adjacent vehicle.

Detection of the adjacent vehicle using the adjacent vehicle detection unit 21 is performed when the host vehicle travels in the vicinity of the stop line before entering the intersection. Note that the detection of the adjacent vehicle may also be performed when the vehicle stops on the stop line on the basis of a stop sign of a traffic light.

The traveling path setting unit 22 acquires the map information stored in the map memory unit 14 and the in-map host vehicle location information obtained from the in-map host vehicle location estimation unit 15. The traveling path setting unit 22 sets the traveling path for each lane from the current host vehicle location to the target location by using the destination on the map set by an occupant or the like and the in-map host vehicle location information. In addition, the traveling path setting unit 22 sets the traveling path at the intersection such that a change of the turning radius is reduced.

When the traveling path setting unit 22 cannot acquire the map information, it detects the lane shape around the host vehicle on the basis of image information or the like acquired by the object detection sensor 11, and sets the traveling path by using the detected lane shape as the map information. The information acquired by the in-vehicle sensor such as a camera may be used for setting the traveling path in the traveling path setting unit 22, and information contained in the map data such as road signs, structures, the turning target lanes may be supplementally used. For example, the traveling path setting unit 22 identifies an exit location of the turning target intersection on the basis of a road sign or a structure indicating the turning direction of the right turn within the intersection, and sets the traveling path at the intersection such that a change of the turning radius is minimized between the entrance location and the exit location of the intersection.

When an adjacent vehicle is detected by the adjacent vehicle detection unit 21, the traveling path correction unit 23 corrects (sets) the traveling path for turning at the intersection set by the traveling path setting unit 22 to the inner side of the turning direction. That is, when no adjacent vehicle is detected by the adjacent vehicle detection unit 21, the traveling path correction unit 23 sets the traveling path at the intersection such that a change of the turning radius is minimized between the entrance location and the exit location of the intersection. When an adjacent vehicle is detected by the adjacent vehicle detection unit 21, the traveling path at the intersection is set by correcting the traveling path set in a case where no adjacent vehicle is detected by the adjacent vehicle detection unit 21 to the inner side of the turning direction.

Note that the adjacent vehicle detected by the adjacent vehicle detection unit 21 includes not only the adjacent turning vehicle shown in FIG. 2 but also the adjacent vehicle traveling straight ahead. However, when there is an adjacent vehicle including an adjacent turning vehicle outward of the turning direction, the traveling path correction unit 23 corrects the traveling path to the inner side of the turning direction. Therefore, when there is the adjacent turning vehicle B as shown in FIG. 2, it is possible to reduce a risk of the adjacent turning vehicle B approaching the host vehicle A. Naturally, the traveling path may be corrected to the inner side of the turning direction only when the adjacent vehicle detected by the adjacent vehicle detection unit 21 is the adjacent turning vehicle.

After the traveling path created by the traveling path creation unit 20 is created in this manner, and the traveling path is corrected as necessary, the vehicle control unit 31 controls the vehicle along the set traveling path.

The vehicle control unit 31 creates a traveling path and a speed profile so as to follow the traveling path of the host vehicle while observing the traffic regulations, collide with no other vehicle on the basis of the predicted traveling path of the other vehicles, and travel smoothly without sudden deceleration or sudden steering caused by a behavior of any other vehicle. In addition, the vehicle control unit 31 controls the vehicle on the basis of the created traveling path and speed profile. Note that the vehicle control unit 31 may provide a display of driving assistance on the basis of the host vehicle path and the speed profile.

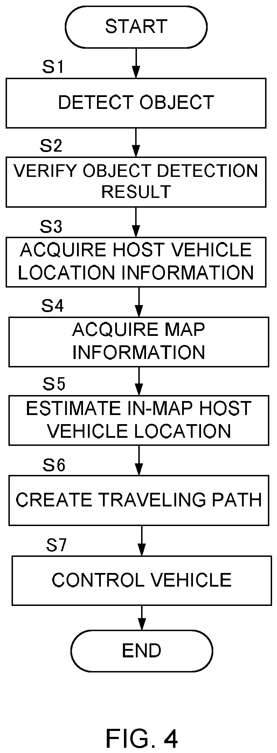

FIG. 4 is a flowchart illustrating a driver-assistance control performed by the driver-assistance device 1. Note that this driver-assistance control is repeatedly executed at a predetermined cycle. Furthermore, this driver-assistance control may also be performed by executing a program stored in the controller provided in the driver-assistance device 1.

In step S1, the controller (object recognition unit 12) acquires a location, traveling direction, size, speed, or the like of each object existing around the host vehicle by using the object detection result around the host vehicle from the object detection sensor 11. The detection result includes a two-dimensional location, posture, size, speed, or the like of the object, for example, in a zenithal map obtained by observing the host vehicle from the sky.

In step S2, the controller (object recognition unit 12) corrects an error of the object detection sensor 11 on the basis of the object detection result in step S1, and verifies (associates) the object identity in the object detection results output at different times. In this manner, the controller (object recognition unit 12) outputs the recognition result such as a location, traveling direction, size, speed, or the like of the object existing around the host vehicle to the traveling path creation unit 20.

In step S3, the controller (in-map host vehicle location estimation unit 15) acquires the host vehicle location on the basis of the detection result of the host vehicle location acquisition sensor 13.

In step S4, the controller (in-map host vehicle location estimation unit 15) acquires high-precision map data stored in the map memory unit 14.

In step S5, the controller (in-map host vehicle location estimation unit 15) identifies the host vehicle location in the map by using the host vehicle location acquired in step S3 and the map data acquired in step S4.

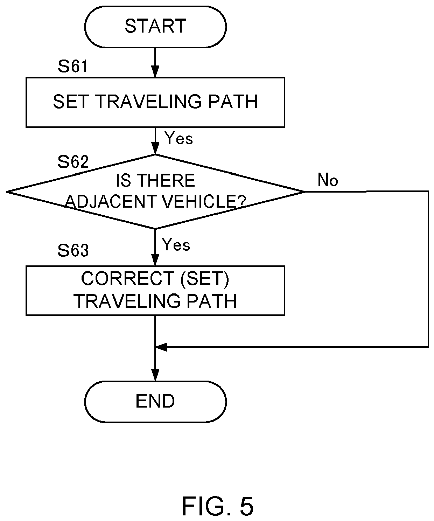

In step S6, the controller (traveling path creation unit 20) creates a traveling path of the host vehicle by using the detection result of the object existing in the vicinity of the host vehicle acquired in step S2, the in-map host vehicle location acquired in step S5, and information on the destination. Note that details of the processing of step S6 will be described below with reference to FIG. 5.

In step S7, the controller (vehicle control unit 31) causes the host vehicle to travel along the host vehicle traveling path created in step S6. In addition, the controller (vehicle control unit 31) may provide driver-assistance so as to travel along the host vehicle traveling path created in step S6.

FIG. 5 is a flowchart illustrating details of the traveling path creation control in step S6 of FIG. 4.

In step S61, the controller (traveling path setting unit 22) sets the traveling path from the current location of the host vehicle to the destination or a transit location to the destination by using the map information stored in the map memory unit 14, the in-map host vehicle location information obtained by the in-map host vehicle location estimation unit 15, and information on the destination.

In step S62, the controller (the adjacent vehicle detection unit 21 or the traveling path correction unit 23) detects another vehicle existing within a predetermined distance range in the outer side (left side) of the turning direction as an adjacent vehicle when the host vehicle traveling path set in step S61 includes a turn (right turn) of the host vehicle across the other lane at the intersection, and the current location of the host vehicle is within a predetermined distance from the entrance of the intersection (in the vicinity of the intersection).

In addition, when the adjacent vehicle is detected (S62: Yes), the controller then executes the processing of step S63. When the adjacent vehicle is not detected (S62: No), the controller terminates the traveling path creation control.

In step S63, the controller (traveling path correction unit 23) corrects (sets) the traveling path set by the traveling path setting unit 22 in step S61 to the inner side of the turning direction. By correcting the traveling path in this manner, it is possible to reduce a risk of the adjacent vehicle B approaching the host vehicle A under the situation of in FIG. 2.

In addition, the vehicle control unit 31 controls the travel of the host vehicle along the traveling path created by the traveling path creation unit 20. As a result, it is possible to suppress autonomous driving from being canceled by a driver who operates the steering wheel in response to an approach of the adjacent turning vehicle to the host vehicle. Therefore, it is possible to continuously perform autonomous driving and improve stability of the driving condition.

Using the driver-assistance device 1 according to the first embodiment, it is possible to obtain the following effects.

In the traveling path setting method according to the first embodiment, when the host vehicle turns across the other lane at an intersection (turn right in this embodiment), and an adjacent vehicle existing in the outer side of the turning direction (left side in this embodiment) is detected (S62: Yes), the traveling path at the intersection is set to the inner side of the turning direction compared to a case where no adjacent vehicle is detected (S63). In this manner, by using the information on the adjacent vehicle existing around the host vehicle in addition to the information on the host vehicle traveling path, it is possible to prevent the adjacent vehicle from approaching the host vehicle when there is a possibility that the adjacent vehicle turns and approaches the host vehicle.

In the traveling path setting method according to the first embodiment, as shown in FIG. 3, the traveling path correction unit 23 corrects the turning start position X to the position X' in the front side of the traveling direction in the turning path at the intersection, and corrects the turning end position Y to the position Y' in the destination side of the traveling direction. The traveling path is set such that a change of the turning radius is minimized between the positions X' and Y' corrected in this manner.

As a result, the location of the host vehicle in the lateral direction does not change at the start and end of the turning. In addition, by setting the turning path such that a change of the turning radius is minimized, it is possible to suppress degradation of ride quality caused by a change in the location of the lateral direction or the turning radius of the host vehicle.

### <Modification>

The first embodiment has been described by exemplifying a case where the traveling path setting unit 22 sets the host vehicle traveling path on the basis of the map information and controls the host vehicle to travel along the traveling path. However, the present invention is not limited thereto. The traveling path setting unit 22 may set the traveling path range as a traveling area having a predetermined width in the lateral direction, formed in the outer boundary of the turning direction and the inner boundary of the turning direction, and set the traveling path within the traveling path range.

In this case, the traveling path setting unit 22 sets the traveling path such that the steering wheel operation becomes smaller in the set traveling path range. In addition, when an adjacent vehicle is detected, the traveling path correction unit 23 changes the outer boundary of the turning direction of the traveling path range to the inner side, and sets the traveling path again within the changed traveling path range. In this manner, the traveling path is corrected.

By making correction in this manner, the location of the host vehicle in the lateral direction does not change at the start and end of the turning. Therefore, it is possible to suppress degradation of ride quality caused by a change in the location of the host vehicle in the lateral direction.

### <Second Embodiment

In the first embodiment, an example in which the traveling path creation unit 20 detects an adjacent vehicle including an adjacent turning vehicle mainly on the basis of the recognition result from the object recognition unit 12 has been described. However, the present invention is not limited thereto. In this embodiment, an example of detecting an adjacent turning vehicle on the basis of the traveling lane will be described.

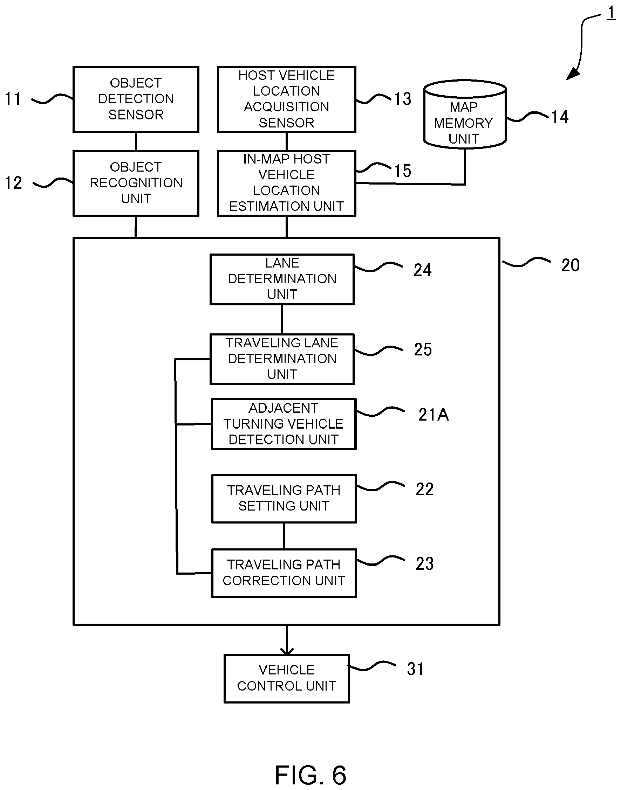

FIG. 6 is a schematic configuration diagram illustrating a driver-assistance device 1 according to the second embodiment. Referring to this drawing, compared to the configuration of the first embodiment of FIG. 1, the traveling path creation unit 20 has an adjacent turning vehicle detection unit 21A instead of the adjacent vehicle detection unit 21, and additionally has a lane determination unit 24 and a traveling lane determination unit 25.

The lane determination unit 24 determines whether or not there is a right turn lane by determining the type of the host vehicle traveling lane or the adjacent lane on the basis of the in-map host vehicle location information obtained from the in-map host vehicle location estimation unit 15. The lane determination unit 24 may determine whether or not there is a right turn lane from a road sign, a road marking, or the like on the basis of information acquired by an in-vehicle sensor such as a camera instead of the map information.

The traveling lane determination unit 25 determines which lane is used as the traveling lane of the host vehicle. In the example of FIG. 2, the traveling lane determination unit 25 determines whether or not the host vehicle traveling lane is the first turn lane, that is, in the inner side (right side) of the turning direction among a plurality of right turn lanes that turn across the other lane.

In this configuration, first, the adjacent turning vehicle detection unit 21A detects another vehicle existing within a predetermined distance in the lateral side of the host vehicle. In addition, the adjacent turning vehicle detection unit 21A detects the other vehicle as an adjacent turning vehicle when the lane determination unit 24 determines that the host vehicle is traveling in the right turn lane (first turn lane) in the inner side of the turning direction among a plurality of right turn lanes, and the other vehicle is detected in the right turn lane (second turn lane) in the outer side of the turning direction of the host vehicle. Note that the adjacent turning vehicle detection unit 21A may detect turning of the other vehicle by using the recognition result from the object recognition unit 12. In this configuration, it is possible to correct the traveling path only for the adjacent turning vehicle, compared to a case where the adjacent vehicles including the adjacent straight-ahead vehicle and the adjacent turning vehicle are detected and the traveling path is corrected only on the basis of the recognition result from the object recognition unit 12. Therefore, it is possible to suppress unnecessary path correction and prevent an uncomfortable feeling of an occupant.

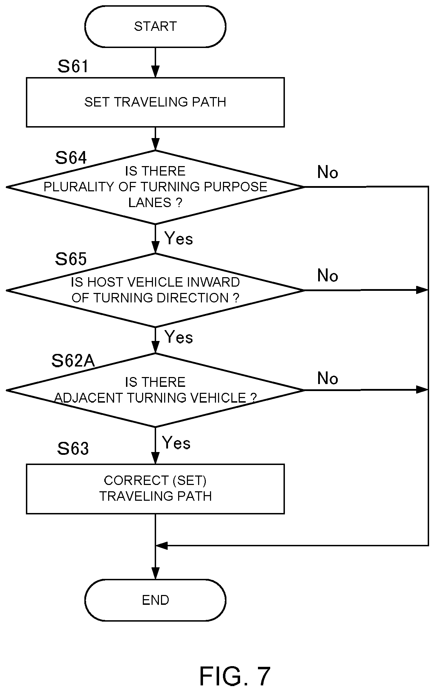

FIG. 7 is a flowchart illustrating details of the traveling path creation control according to this embodiment.

Referring to this drawing, compared to the traveling path creation control of the first embodiment of FIG. 5, step S62A is provided in place of step S62, and steps S64 and S65 are added after step S61 and before step S62A.

In step S64, by using the map information stored in the map memory unit 14 and the in-map host vehicle location information obtained from the in-map host vehicle location estimation unit 15, the controller (lane determination unit 24) determines whether or not the current location of the host vehicle is within a predetermined distance from the entrance of the intersection (in the vicinity of the intersection), and there are a plurality of right turn lanes (turning-purpose lanes) crossing the other lane in front of the intersection ahead.

When there is a plurality of right turn lanes (S64: Yes), the controller then executes the processing of step S65. When a plurality of right turn lanes does not exist (S64: No), the controller terminates the traveling path creation control without correcting the traveling path set in step S61.

In step S65, by using the map information stored in the map memory unit 14 and the in-map host vehicle location information obtained from the in-map host vehicle location estimation unit 15, the controller (lane determination unit 24) determines whether or not the traveling lane of the host vehicle is the first turn lane, which is a lane other than the outermost lane in the turning direction with respect to the turning center of a plurality of right turn lanes (turning-purpose lanes).

When the host vehicle travels in the first turn lane (S63: Yes), the controller then executes the processing of step S64. When the host vehicle does not travel in the first turn lane, that is, when the host vehicle travels in the outermost lane of the turning direction (S63: No), the controller terminates the traveling path creation control without correcting the traveling path set in step S61.

In addition, in step S62A, when the controller (adjacent turning vehicle detection unit 21A) detects another vehicle existing in the second turn lane, which is the right turn lane adjacent to the outside of the turning direction of the host vehicle, the other vehicle is detected as an adjacent turning vehicle. In step S63, when there is the adjacent turning vehicle, the traveling path inside the intersection is corrected.

Using the driver-assistance device 1 according to the second embodiment, it is possible to obtain the following effects.

In the traveling path setting method according to the second embodiment, the traveling path at the intersection is corrected to the inner side (S63) when it is detected that there are two or more turning-purpose lanes (right turn lanes in this embodiment) that turn across the oncoming lane (S64: Yes), the host vehicle travels in the first turn lane, which is a lane other than the outermost lane in the turning direction among a plurality of turning-purpose lanes (S65: Yes), and an adjacent turning vehicle is detected within a predetermined distance in the second turn lane adjacent to outside of the turning direction with respect to the first turn lane (S62A: Yes).

In this configuration, it is possible to improve detection accuracy of the adjacent turn lane, compared to a case where the adjacent turning vehicle is detected using only the object recognition result from the object recognition unit 12 without using the lane information. As a result, it becomes easy to prevent the adjacent turning vehicle from approaching the host vehicle.

### <Third Embodiment

In the first and second embodiments, the traveling path creation unit 20 corrects the traveling path when an adjacent turning vehicle is detected. In the third embodiment, description will be made for an example in which the traveling path is corrected when there is an adjacent turning vehicle, and there is a high possibility that the traveling path of the adjacent turning vehicle is inward of the turning direction compared to a normal state, or when it is actually detected that the traveling path of the adjacent turning vehicle is inward of the turning direction compared to a normal state.

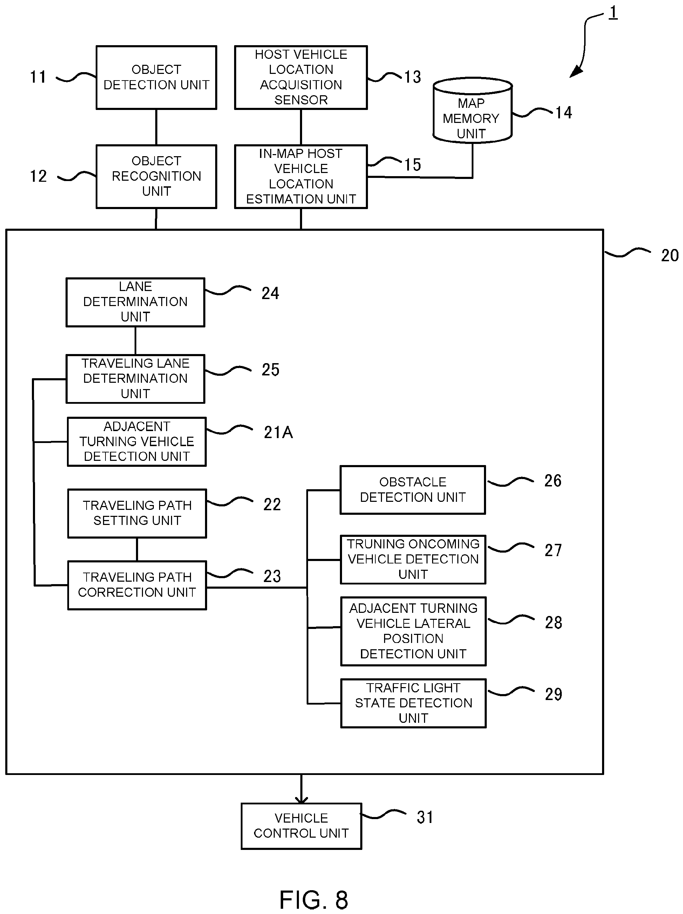

FIG. 8 is a schematic configuration diagram of the driver-assistance device 1 according to the third embodiment. Referring to this drawing, compared to the configuration of the second embodiment of FIG. 6, the traveling path creation unit 20 further has an obstacle detection unit 26, a turning oncoming vehicle detection unit 27, an adjacent turning vehicle lateral position detection unit 28, and a traffic light state detection unit 29.

The obstacle detection unit 26 estimates a traveling path after turning of the adjacent turning vehicle, and determines whether or not there is an obstacle in the estimated traveling path after turning. The traveling path correction unit 23 corrects the traveling path when the obstacle detection unit 26 detects an obstacle in the traveling path after turning of the adjacent turning vehicle.

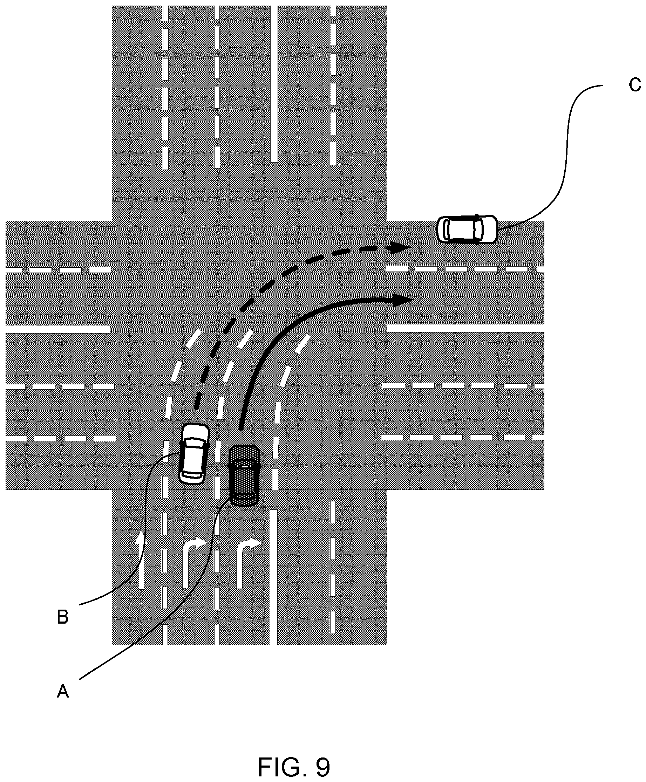

For example, as shown in the example of FIG. 9, a parked vehicle C may exist as an obstacle in the traveling path after the adjacent turning vehicle B turns at an intersection. In this case, the adjacent turning vehicle B is likely to travel on the right side of the lane after the turning in order to avoid the parked vehicle C. Therefore, it is possible to prevent the adjacent turning vehicle from approaching the host vehicle by correcting the traveling path to the inner side of the turning direction using the traveling path correction unit 23.

Referring to FIG. 8 again, the turning oncoming vehicle detection unit 27 determines whether or not there is an oncoming vehicle traveling toward the host vehicle in the oncoming lane, and whether or not the oncoming vehicle makes a turn (right turn) across the straight-ahead lane on the host vehicle side. In addition, the turning oncoming vehicle detection unit 27 detects the oncoming vehicle that makes a turn across the straight-ahead lane on host vehicle side as a turning oncoming vehicle. When the turning oncoming vehicle detection unit 27 detects the turning oncoming vehicle, the traveling path correction unit 23 corrects the traveling path to the inner side.

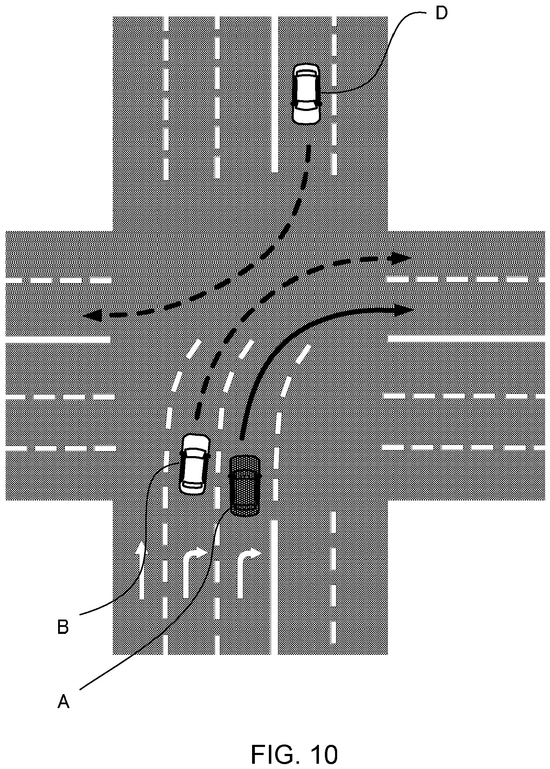

As shown in the example of FIG. 10, there is an oncoming vehicle D in the oncoming lane with respect to the traveling lane of the host vehicle A, and the oncoming vehicle D makes a right turn with respect to the traveling direction (turn to the left in the drawing) across the straight-ahead lane on the host vehicle A side (the path when the host vehicle A goes straight ahead). In this case, the adjacent turning vehicle B is likely to change the traveling path to the inner side at the intersection in order to avoid approaching of the turning oncoming vehicle D. In this regard, it is possible to prevent the adjacent turning vehicle B from approaching the host vehicle A by correcting the traveling path of the host vehicle A to the inner side using the traveling path correction unit 23.

In addition, the traveling path may be corrected when there is an adjacent turning vehicle, and it is detected that the traveling path of the adjacent turning vehicle is actually inward of the turning direction from an ideal traveling path, that is, when the adjacent turning vehicle actually approaches the host vehicle traveling in the inner side of the turning direction during the turn.

Referring to FIG. 8 again, the adjacent turning vehicle lateral position detection unit 28 estimates the ideal turning path of the adjacent turning vehicle, and detects a deviation to inner side in the turning direction of the adjacent turning vehicle with respect to the estimated ideal turning path. In addition, the traveling path correction unit 23 determines whether or not the deviation detected by the adjacent turning vehicle lateral position detection unit 28 is larger than a threshold value. When the deviation is larger than the threshold value, the traveling path is corrected to the inner side.

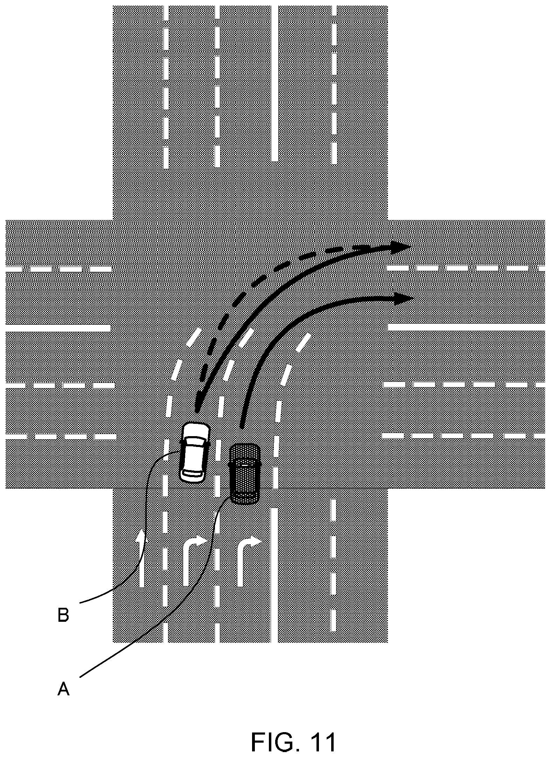

As shown in the example of FIG. 11, it is preferable that the ideal turning path of the adjacent turning vehicle B is set such that a change of the turning radius at the intersection is minimized as indicated by the broken line. However, the adjacent turning vehicle B may travel on the inner side of the turning direction from the optimum traveling path as indicated by the solid line in some cases.

In this case, the adjacent turning vehicle lateral position detection unit 28 detects a deviation to inner side in the turning direction of the adjacent turning vehicle B with reference to the ideal turning path. In addition, when the deviation exceeds a threshold value, the traveling path correction unit 23 corrects the traveling path of the host vehicle A to the inner side of the turning direction. As a result, it is possible to prevent the adjacent turning vehicle B from approaching the host vehicle A.

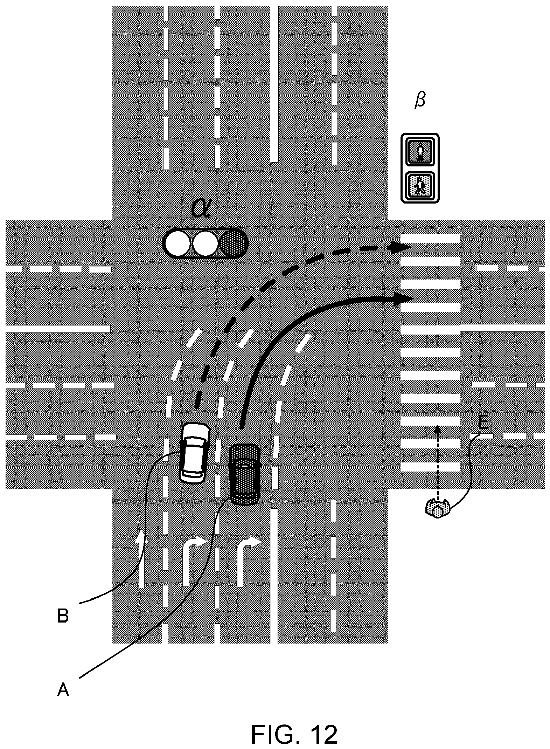

Referring to FIG. 8 again, the traffic light state detection unit 29 acquires information on the traffic light placed at the intersection. For example, as shown in FIG. 12, the traffic light state detection unit 29 detects signs of a traffic light α placed ahead of the host vehicle in the traveling direction to indicate whether or not the host vehicle A and the adjacent turning vehicle B are allowed to go and a pedestrian traffic light β indicating whether or not a pedestrian is allowed to go across the traveling path after turning of the host vehicle A. Note that the traffic light state detection unit 29 may acquire traffic light information from traffic infrastructure via communication. Note that, when the objects placed around the host vehicle detected by the object detection sensor 11 includes a traffic light, an object detection result including lighting states (display state) of each traffic light may be output to the traffic light state detection unit 29, and the traffic light state detection unit 29 may detect the traffic light state on the basis of this result.

When the traffic light α and the pedestrian traffic light β satisfy the following condition, the traveling path correction unit 23 corrects the traveling path of the host vehicle A to the inner side of the turning direction by determining that the adjacent turning vehicle B is highly likely to travel inward of the turning direction at the intersection.

For example, the traveling path correction unit 23 corrects the traveling path of the host vehicle A when the traffic light state detection unit 29 predicts that the time until the STOP (red) lighting is shorter than a predetermined threshold value on the basis of the display pattern of the traffic light α acquired via communication. Immediately before the traffic light changes to STOP, the adjacent turning vehicle B is likely to travel further inward in the turning direction at the intersection in order to shorten the travel distance and the turning time at the intersection. In this regard, it is possible to prevent the adjacent turning vehicle B from approaching the host vehicle A by correcting the traveling path of the host vehicle A to the inner side of the turning direction.

In addition, the traffic light state detection unit 29 may determine that the time until the change to STOP (red) is short when the lighting time of GO (green) of the traffic light α (that is, the elapsed time after the traffic light α changes to GO) is longer than a predetermined threshold value. Therefore, the traveling path correction unit 23 corrects the traveling path of the host vehicle A. As a result, even when it is difficult to acquire a display pattern of the traffic light via communication, and the adjacent turning vehicle B is likely to travel further inward at the intersection, it is possible to prevent the adjacent turning vehicle B from approaching the host vehicle A by correcting the traveling path of the host vehicle A to the inner side of the turning direction.

In addition, when the traffic light state detection unit 29 detects a change of the pedestrian traffic light β from GO (green) to STOP (red), it is expected that the traffic light α changes to STOP soon. Therefore, the traveling path correction unit 23 corrects the traveling path of the host vehicle A. When a driver of the adjacent turning vehicle B detects that the sign of the pedestrian traffic light β has changed from GO (green) to STOP (red), it may be predicted that the time until the traffic light α changes to STOP (red) is short. Therefore, the adjacent turning vehicle B is likely to travel further inward at the intersection. In this regard, it is possible to prevent the adjacent turning vehicle B from approaching the host vehicle A by correcting the traveling path of the host vehicle A to the inner side of the turning direction.

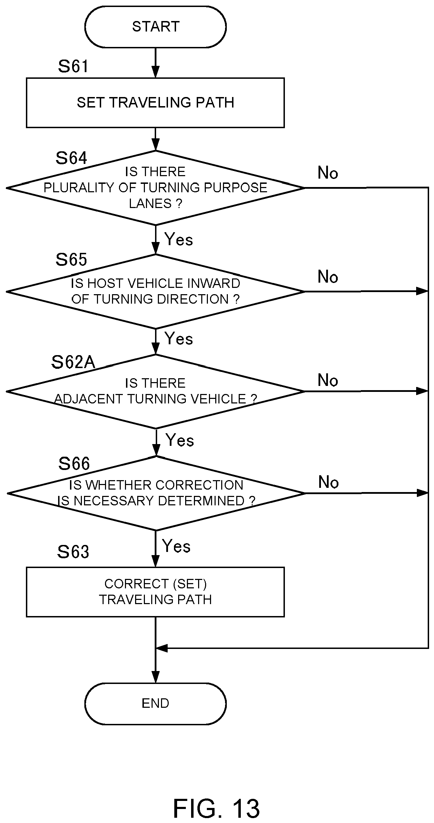

FIG. 13 is a flowchart illustrating details of the traveling path creation control according to this embodiment.

Referring to this drawing, the processing of step S66 is added after step S62A and before step S63, compared to the traveling path creation control of the second embodiment of FIG. 7.

In step S66, the traveling path correction unit 23 determines whether or not it is necessary to correct the traveling path. Specifically, the traveling path correction unit 23 determines whether or not it is necessary to correct the traveling path on the basis of detection results of at least one of the obstacle detection unit 26, the turning oncoming vehicle detection unit 27, the adjacent turning vehicle lateral position detection unit 28, and the traffic light state detection unit 29.

That is, the traveling path correction unit 23 corrects the traveling path when the traveling path of the adjacent turning vehicle is highly likely to be inward in the turning direction as in the case where the obstacle detection unit 26 detects an obstacle in the traveling path after turning of the adjacent turning vehicle, and the case where the turning oncoming vehicle detection unit 27 detects a turning oncoming vehicle making a turn across the straight-ahead lane of the host vehicle side. Alternatively, the traveling path correction unit 23 corrects the traveling path when a deviation of an actual traveling path in the turning direction of the adjacent turning vehicle with respect to the ideal turning path of the adjacent turning vehicle detected by the adjacent turning vehicle lateral position detection unit 28 exceeds a threshold value.

In addition, the traveling path correction unit 23 may correct the traveling path when it is expected that the traveling path of the adjacent turning vehicle is highly likely to be inward of the turning direction on the basis of the detection result from the traffic light state detection unit 29 for at least one of the states of the traffic light α indicating the traveling directions of the host vehicle A and the adjacent turning vehicle B, and the pedestrian traffic light β indicating whether or not a pedestrian is allowed to go across the traveling path after turning of the host vehicle A.

Specifically, the traveling path correction unit 23 corrects the traveling path when it is predicted that the time until the traffic light α changes to STOP (red) is shorter than a threshold value, or when the lighting time of GO (green) of the traffic light α is longer than a threshold value. The traveling path correction unit 23 corrects the traveling path when it is detected that the sign of the pedestrian traffic light β has changed from GO (green) to STOP (red).

As a result, it is possible to more accurately determine whether or not it is necessary to correct the traveling path, and thus suppress unnecessary correction of the traveling path.

In addition, when the width of the turning oncoming vehicle exceeds a threshold value, it is highly likely that the adjacent turning vehicle B travels inward of the turning direction at the intersection. For this reason, when the turning oncoming vehicle detection unit 27 can detect the width of the turning oncoming vehicle, the traveling path correction unit 23 corrects the traveling path by detecting that the width of the turning oncoming vehicle exceeds the threshold value. As a result, it is possible to reduce a risk of the adjacent turning vehicle approaching the host vehicle. Note that the turning oncoming vehicle detection unit 27 may detect a total length or height of the turning oncoming vehicle to determine the vehicle type (such as a bus or a truck).

As another example, the traveling path correction unit 23 may correct the traveling path when the turning oncoming vehicle detection unit 27 detects that the adjacent turning vehicle B travels in parallel on the lateral side outward of the turning direction of the host vehicle A. As a result, it is possible to further reduce a risk of the adjacent turning vehicle approaching the host vehicle.

Using the driver-assistance device 1 according to the third embodiment, it is possible to obtain the following effects.

In the traveling path setting method according to the third embodiment, the traveling path is corrected to the inner side of the turning direction (S63) when an adjacent turning vehicle exists on the outer side of the traveling path of the host vehicle in the turning direction, and an obstacle such as a parked vehicle or a construction site is detected in the traveling path after turning of the adjacent turning vehicle by the obstacle detection unit 26 (S66: Yes).

As illustrated in FIG. 9, when a parked vehicle C exists as an obstacle in the traveling path after turning of the adjacent turning vehicle B at the intersection, the adjacent turning vehicle B is highly likely to travel toward the lane near the center which is inward of the turning direction after the turning in order to avoid the parked vehicle C. In this regard, it is possible to prevent the adjacent turning vehicle B from approaching the host vehicle A by correcting the traveling path of the host vehicle A to the inner side of the turning direction.

In the traveling path setting method according to the third embodiment, the traveling path is corrected to the inner side of the turning direction (S63) when an adjacent turning vehicle exists on the outer side of the traveling path of the host vehicle in the turning direction, and the turning oncoming vehicle detection unit 27 detects a turning oncoming vehicle that exists on the oncoming lane and makes a turn across the straight-ahead lane of the host vehicle (S66: Yes).

As shown in FIG. 10, when there is a turning oncoming vehicle D, the adjacent turning vehicle B is highly likely to travel further inward at the intersection in order to avoid approaching of the turning oncoming vehicle D. In this regard, it is possible to prevent the adjacent turning vehicle B, which may travel on the inner side, from approaching the host vehicle A by correcting the traveling path to the inner side using the traveling path correction unit 23.

In the traveling path setting method according to the third embodiment, the traveling path is corrected to the inner side of the turning direction (S63) when there is an adjacent turning vehicle existing outward of the traveling path of the host vehicle in the turning direction, the turning oncoming vehicle detection unit 27 detects the width of the turning oncoming vehicle, and the detected width exceeds a threshold value (S66: Yes). When the width of the turning oncoming vehicle is large, the adjacent turning vehicle B is highly likely to travel further inward at the intersection in order to avoid the turning oncoming vehicle from approaching. In this regard, it is possible to prevent the adjacent turning vehicle B from approaching the host vehicle A by correcting the traveling path to the inner side using the traveling path correction unit 23.

In the traveling path setting method according to the third embodiment, when there is an adjacent turning vehicle existing outward of the traveling path of the host vehicle in the turning direction,
a deviation of an actual turning path of the adjacent vehicle to the inner side of the turning direction with respect to an ideal turning path of the adjacent turning vehicle is further detected by the adjacent turning vehicle lateral position detecting unit 28. Then, the traveling path correction unit 23 corrects the traveling path to the inner side of the turning direction (S63) when the deviation exceeds a threshold value (S66: Yes).

As shown in FIG. 11, it is preferable that the adjacent turning vehicle B travels on an ideal turning path (broken line) such that a change of turning radius at the intersection is minimized. However, the adjacent turning vehicle B may travel on a traveling path inward of the turning direction (solid line) with respect to the ideal turning path in some cases. In this regard, when the deviation of the actual turning path of the adjacent turning vehicle B to the inner side of the turning direction with respect to the ideal turning path exceeds a threshold value, the traveling path correction unit 23 corrects the traveling path to the inner side of the turning direction compared to a case where the deviation does not exceed the threshold value. As a result, it is possible to prevent the adjacent turning vehicle B from approaching the host vehicle A.

In the traveling path setting method according to the third embodiment, as shown in FIG. 12, the traffic light state detection unit 29 acquires a display state of the traffic light α indicating whether or not the host vehicle is allowed to go. In addition, the traveling path correction unit 23 estimates whether or not the traffic light α displays STOP within a predetermined time. When there is an adjacent turning vehicle existing outward of the traveling path of the host vehicle in the turning direction, and it is estimated that STOP is displayed within a predetermined time (S66: Yes), the traveling path correction unit 23 corrects the traveling path to the inner side of the turning direction (S63).

Immediately before the traffic light α changes to STOP, the adjacent turning vehicle B is highly likely to travel further inward at the intersection in order to shorten the travel distance and turning time at the intersection. In this regard, it is possible to prevent the adjacent turning vehicle B from approaching the host vehicle A by correcting the traveling path of the host vehicle A to the inner side of the turning direction.

In the traveling path setting method according to the third embodiment, the traveling path correction unit 23 corrects the traveling path to the inner side of the turning direction (S63) when there is an adjacent turning vehicle existing outward of the traveling path of the host vehicle in the turning direction, and the time for which the traffic light α displays GO is equal to or longer than a predetermined time (S66: Yes).

When the traffic light α displays GO for a long time, it may be the situation immediately before the traffic light α changes to STOP. Therefore, the adjacent turning vehicle B is highly likely to travel further inward at the intersection in order to shorten the travel distance and the turning time at the intersection. In this regard, it is possible to prevent the adjacent turning vehicle B from approaching the host vehicle A by correcting the traveling path of the host vehicle A to the inner side of the turning direction.

In the traveling path setting method according to the third embodiment, the traffic light state detection unit 29 detects the state of the pedestrian traffic light β for a pedestrian E who crosses the turning target path of the host vehicle A. In addition, the traveling path correction unit 23 corrects the traveling path to the inner side of the turning direction (S63) when the adjacent turning vehicle exists outward of the traveling path of the host vehicle in the turning direction, and it is detected that the pedestrian traffic light β has changed from GO to STOP (S66: Yes).

When a change of the pedestrian traffic light β from GO to STOP is detected, it is expected that the traffic light α indicating whether or not the adjacent turning vehicle B is allowed to go has not changed to STOP. For this reason, the adjacent turning vehicle B may travel further inward of the traveling path to shorten the travel distance and the turning time at the intersection. In this regard, it is possible to prevent the adjacent turning vehicle B from approaching the host vehicle A by correcting the traveling path of the host vehicle A to the inner side of the turning direction.

### <Modification>

In the third embodiment, description has been made for an example in which the traveling path correction unit 23 determines whether or not correction of the traveling path is necessary on the basis of a detection result from at least one of the obstacle detection unit 26, the turning oncoming vehicle detection unit 27, the adjacent turning vehicle lateral position detection unit 28, and the traffic light state detection unit 29 in order to determine whether or not correction is necessary in step S66. However, the present invention is not limited thereto.

In order to determine whether or not correction is necessary in step S66, the traveling path correction unit 23 may obtain a possibility that the adjacent turning vehicle travels on the inner side of the turning direction on the basis of the detection results of the obstacle detection unit 26, the turning oncoming vehicle detection unit 27, the adjacent turning vehicle lateral position detection unit 28, and the traffic light state detection unit 29, and determine that the correction is necessary when the possibility exceeds a threshold value. In this configuration, it is possible to determine whether or not correction of the traveling path is necessary in consideration of an actual traveling condition.

### <Fourth Embodiment>

In the third embodiment, description has been made for an example in which whether or not correction is necessary in step S66 in addition to whether or not there is an adjacent turning vehicle. However, the present invention is not limited thereto. For example, the correction amount may be changed instead of determining whether or not correction is necessary.

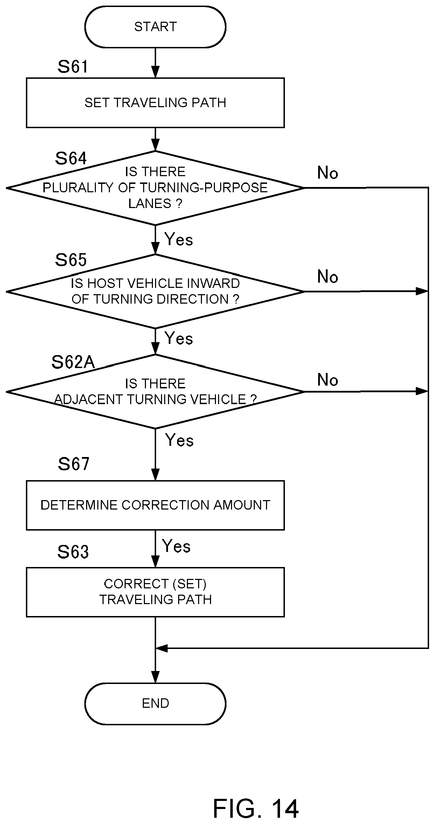

FIG. 14 is a flowchart illustrating details of the traveling path creation control according to the fourth embodiment. Compared to the traveling path creation control of the third embodiment shown in FIG. 13, the processing of step S67 is added instead of step S66.

In step S67, the traveling path correction unit 23 obtains probabilities that an adjacent turning vehicle approaches the host vehicle for each of the detection results of the obstacle detection unit 26, the turning oncoming vehicle detection unit 27, the adjacent turning vehicle lateral position detection unit 28, and the traffic light state detection unit 29. In addition, the traveling path correction unit 23 determines the correction amount of the traveling path on the basis of a sum of those probabilities.

As a result, it is possible to correct the traveling path to the inner side of the turning direction step by step, and avoid the adjacent turning vehicle from approaching on the basis of the probabilities. Therefore, it is possible to prevent the host vehicle from being steered abruptly, which degrades the ride quality.

Note that each of the aforementioned embodiments may be combined with each other in any manner within a range that does not cause a problem.

A control program for causing the controller, which is a computer, to execute the processing described in each embodiment, and a storage medium storing the control program are also within the scope of the matters described in the specification and the like at the time of filing.

## Claims

1. A traveling path setting method for a vehicle, wherein
a set traveling path of a host vehicle includes a traveling path that turns across another lane at an intersection; and
the traveling path setting method is configured to set a traveling path for turning of the vehicle to an inner side of a turning direction when an adjacent vehicle exists within a predetermined distance outward of the traveling path of the host vehicle in the turning direction, compared to a case where no adjacent vehicle exists.

2. The traveling path setting method according to claim 1, the method is configured:
to detect whether or not there are two or more turn lanes that turns across the other lane in front of the intersection; and
to set the traveling path to the inner side of the turning direction when the host vehicle travels on a first turn lane that is a lane other than an outermost lane in the turning direction among the turn lanes, and when the adjacent vehicle exists on a second turn lane outward of the first turn lane in the turning direction, compared to a case where no adjacent vehicle is detected.

3. The traveling path setting method according to claim 1 or 2, the method is further configured:
to estimate a traveling path of the adjacent vehicle; and
to set the traveling path to the inner side of the turning direction when the adjacent vehicle exists and an obstacle is detected in the estimated traveling path after turning of the adjacent vehicle.

4. The traveling path setting method according to any one of claims 1 to 3, the method is further configured:
to detect a turning oncoming vehicle that is an oncoming vehicle traveling on an oncoming lane as the other lane and turns across a straight-ahead path of the host vehicle; and
to set the traveling path to the inner side of the turning direction when the adjacent vehicle exists and the turning oncoming vehicle is detected.

5. The traveling path setting method according to claim 4, the method is further configured:
to detect a width of the turning oncoming vehicle; and
to set the traveling path to the inner side of the turning direction when the adjacent vehicle exists, the turning oncoming vehicle is detected, and the width exceeds a threshold value, compared to a case where the width does not exceed the threshold value.

6. The traveling path setting method according to any one of claims 1 to 5, the method is further configured:
to obtain an ideal turning path of the adjacent vehicle at the intersection;
to obtain a deviation of an actual traveling path of the adjacent vehicle to the inner side of the turning direction with respect to the ideal turning path; and
to set the traveling path to the inner side of the turning direction when the adjacent vehicle exists and the deviation exceeds a threshold value.

7. The traveling path setting method according to any one of claims 1 to 6, the method is further configured:
to detect a sign of a traffic light indicating whether or not the host vehicle is allowed to go; and
to set the traveling path to the inner side of the turning direction when the adjacent vehicle exists and it is estimated that the sign of the traffic light changes from GO to STOP after a predetermined time.

8. The traveling path setting method according to any one of claims 1 to 6, the method is further configured:
to detect a sign of a traffic light indicating whether or not the host vehicle is allowed to go; and
to set the traveling path to the inner side of the turning direction when the adjacent vehicle exists and it is detected that a GO sign of the traffic light continues for a predetermined time or longer.

9. The traveling path setting method according to any one of claims 1 to 6, the method is further configured:
to detect a sign of a pedestrian traffic light indicating whether or not a pedestrian is allowed to go across the traveling path after turning of the host vehicle; and
to set the traveling path to the inner side of the turning direction when the adjacent vehicle exists and a change of the sign of the pedestrian traffic light from GO to STOP is detected.

10. The traveling path setting method according to any one of claims 1 to 9, wherein
the setting of the traveling path to the inner side of the turning direction is performed such that a turning start position of the host vehicle is moved to a front side of the traveling direction and a turning end position of the host vehicle is moved to a destination side of the traveling direction.

11. The traveling path setting method according to any one of claims 1 to 9, wherein
the setting of the traveling path is performed such that an allowable travel range having a length in a lateral direction is set and the traveling path is set within the allowable travel range, and
the setting of the traveling path to the inner side of the turning direction is performed such that an outer boundary of the allowable travel range in the turning direction is changed to the inner side of the turning direction and the traveling path is set within the changed allowable travel range.

12. A traveling path setting device for a vehicle, comprising:
a sensor configured to detect a surrounding environment of a host vehicle; and
a controller configured to set a traveling path of the host vehicle on the basis of information on the surrounding environment detected by the sensor, wherein
the controller is configured:
to set a traveling path including a path for turning across another lane at an intersection; and
to set the traveling path to an inner side of the turning direction when an adjacent vehicle exists within a predetermined distance outward of the traveling path in the turning direction, compared to a case where the adjacent vehicle does not exist.
